# EUROPEAN PATENT APPLICATION

(11) **EP 0 699 380 A1**
(43) Date of publication of application: **06.03.1996**
(21) Application number: 94905307.8
(22) Date of filing: 02.12.1993
(51) Int. Cl.: A01D 33/08, A01D 45/00

(54) **DEVICE FOR SEPARATING OF VEGETABLES AND ROOT-CROPS FROM ADMIXTURES**

(71) Applicant: Tarasenko, Vladimir V., Melitopol, 332313 (UA); Kindzersky, Vasily Vasilievich, Beltsy, 279200 (MD)
(72) Inventor: Tarasenko, Vladimir V., Melitopol, 332313 (UA); Kindzersky, Vasily Vasilievich, Beltsy, 279200 (MD)
(74) Representative: Patentanwälte Zellentin & Partner
(86) International application number: PCT/UA93/00006
(87) International publication number: WO 95/15075

(57) **Abstract**

Device for separating of vegetables and root-crops from admixtures comprises a transporter (6) with protruding fingers (7) on which the products for separation are fed, the transporter is mounted under the angle to the horizon. The transporter (6) has at least one bend part of the upper bed (13) in the zone of which protruding fingers (7) of the transporter (6) move apart and the products for separation screened between them; behind the zone the protruding fingers (7) draw together making efforts enough to clamp and/or to destroy at least some part of admixtures. The appliance for carrying the vegetables away (11) is placed behind the transporter (6).

## Description

### The Technical Field

This invention concerns agricultural machines or, more exactly, equipment for separating of vegetables and root-crops from admixtures.

### The Level of Previous Technique

The known device for separating of potatoes from admixtures contains a cylindrical drum with an elastic surface and a transporter with some elastic fingers for picking of vegetables or root-crops. The transporter is made as a horizontal endless band which is placed under the drum and has a clearance smaller than the length of the elastic finger. The drum has a drive providing it with line velocity which is faster than that of the transporter. Under the lower branch of the transporter band a contrary rotating brush is placed so that it interacts the transporter fingers (SU, A, 1576005).

Mixture of mother and rotten potatoes is carried on the upper part of the transporter. Moving along the transporter band, the root-crops pass under the drum. At this moment the rotten potatoes are squashed and stick to the fingers, while conditional root-crops move non-damaged under the drum and leave the transporter. The stocken root-crops move to the lower band of the transporter and under the influence of vibration and than of the brush are taken away to another transporter.

This device is not effective for separating of vegetables like tomatoes and peppers from the admixtures because these vegetables are damaged by the drum in the process of its interacting heap of vegetables. Therefore this device is not universal and its application is limited.

Another known device for separating of root-crops from admixtures comprises a working organ of an agricultural machine for root-crops processing. This device consists of finger-hill with upper and lower parts made of separate transporting contours placed under different angles to the horizon. The working surface of the upper part is fixed under bigger angle than that of the lower part. Both parts are dropping down. A contrary rotating brush is placed over the descending part of the hill (SU, A, 1583018).

Having a small difference in rolling friction coefficients over the finger-hill transporter, rounded clods roll-down a more steep upper part. If they are rolling down less steep lower part, they are caught by the brush and led to the root-crops fraction. In case rolling the clods together with the fingers of the lower part of the hill, they can not be led to the transporter carrying out the admixtures because the fingers on the upper part of the hill drop the clods to the brush. This decreases the separating coefficient of the admixtures. Thus the above mentioned device can separate only the admixtures with the equivalent diameter, smaller than the interfinger clearance of the transporter.

### The Essence of the Invention

The main task of the invention was to create the device for separating vegetables and root-crops from admixtures not depending on the size of the admixture fractions. It must have been reached by changing of the transporter's construction.

This task is solved as follows. In the device for separating of vegetables and root-crops from admixtures comprising a transporter with protruding fingers mounted under the angle to the horizon and receiving the separating products and an appliance for carrying out the vegetables placed after the transporter, according to the invention the transporter has at least one bend part of the upper bed in the zone of which the protruding fingers of the transporter move apart and the separating products are devid between them. Behind this zone the fingers draw together making the efforts enough to clamp and/or destroy at least some part of the admixtures.

It is expedient that the transporter should have at least one tension device for the upper bed forming the bend and inclined parts, and some rollers mounted on the frame along the transporter so as they could regulate the length and the angle of the pitch of the corresponding inclined parts.

It is expedient that all the inclined parts of the transporter should have the angle of obliquity smaller than that of friction of the admixtures on the transporter and the angle of obliquity of at least one of dropping down parts should be equal or bigger than the angle of friction of vegetables on the transporter. The last of the dropping down parts of the transporter should have the angle of obliquity equal or bigger than the angle of friction of vegetables on the transporter.

It is desirable that at least one of the bending parts of the transporter where the fingers move apart an element of forced plunging of the products of separation in the clearance between the fingers should be placed.

Besides, the transporter might be made of rigid rods with fingers mounted on locked and endless conveying belts, and the protruding fingers might form cells with the size smaller that the size of vegetables.

It is desirable that the device should have an additional transporter placed in front of the main transported as inclinable to the horizon.

It is also convenient for the brush drum to be made of sections with hair of different length and hardness and to have at least one of the sections with blades lower than the hair of the sections, or at least one of the sections should have blades alternating with the hair.

In the front zone of the main transporter it is desirable to mount the device which limits the zone for the appearing of the products for separation on the transporter. This device should have protruding fingers on its cylinder surface alternating with the fingers of the main transporter while the device and the main transporter are moving.

It is expedient that the protruding fingers of the main transporter should have different length, the hardness of the hair on the brush drum should be weaker than that of the fingers on the main transporter, and at least one of the dropping down parts of the upper bed of the main transporter should have a shaking mechanism.

It is desirable that the device should have the appliance for deviding of the products for separation placed in the zone where they are leaving the brush drum. This appliance should comprise a foundation fixed on the frame so that its angle position to the brush drum could be regulated, and it should drum could be regulated, and it should have protruding fingers directed to the brush drum and forming a comb.

The appliance for deviding of the product of separation may be fit with a clearance relatively to the transporter and the brush drum so that the comb fingers alternate with the brush drum sections and the hair of the brush drum could protrude over the comb fingers in the zone where products of separation fall down.

It is desirable that the transporter for vegetables should be placed perpendicularly and inclinedly to the brush drum.

Besides, this appliance for deviding of the products for separation may comprise an amortizating plate placed between the brush drum and the transporter for vegetables.

Each protruding finger on the main transporter which has the shape of a truncated cone or a truncated pyrmid may be fixed on the main transporter by its smaller foundation.

This construction of the device helps to raise the separation quality and complete safety of the process.

### The Short Description of the Drawings

Below the invention is explained in accordance to accompanying drawings. There are such figures there:
- Fig. 1: the device for separating of vegetables and root-crops from admixtures in accordance to the invention, drawn in side view;
- Fig. 2: the transporter for separating of vegetables and root-crops from admixtures which has several bend parts, in accordance to the invention;
- Fig. 3: the same device with the brush drum, in accordance to the invention;
- Fig. 4: another variant of the device, in accordance to the invention;
- Fig. 5: one more variant of the device, in accordance to the invention;
- Fig. 6: a rod of the transporter, in accordance to the invention;
- Fig. 7: the brush drum (longitudinal section), in accordance to the invention;
- Fig. 8: another variant of the brush drum in accordance to the invention;
- Fig. 9: a section of the brush drum (side view), in accordance to the invention;
- Fig. 10: the protruding finger (section), in accordance to the invention;
- Fig. 11: the transporter rod with fingers of different length, in accordance to the invention;
- Fig. 12: the appliance with the inclined falling down transporter, in accordance to the invention;
- Fig. 13: the same appliance with the vibrator, in accordance to the invention;
- Fig. 14: the same appliance with a devider for separating products, in accordance to the invention;
- Fig. 15: view along the arrow A to fig. 14;
- Fig. 16: the same appliance with an amortizing plate, in accordance to the invention;
- Fig. 17: view along the arrow B to fig. 16.

### The Best Variant of the Invention Implement

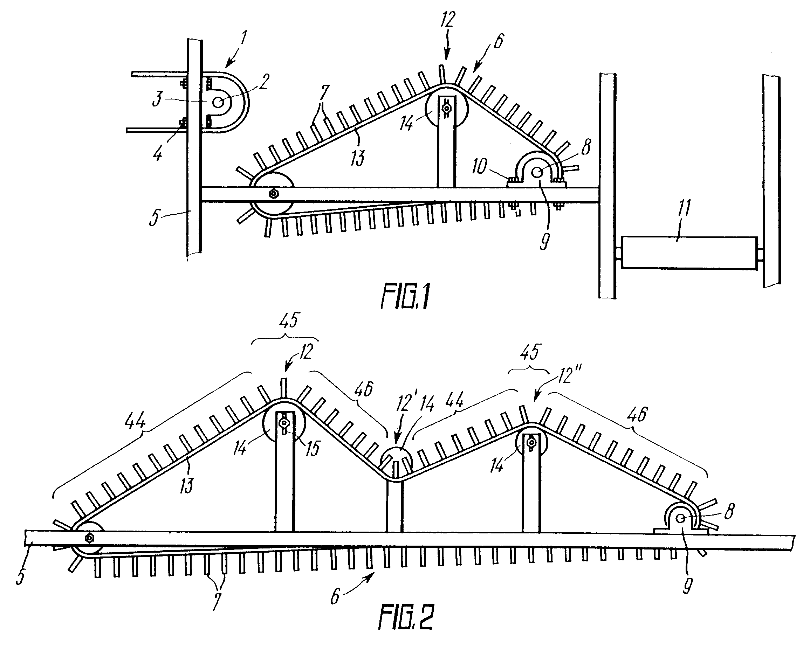

The device for separating of vegetables and root-crops from admixtures comprises a transporter 1 (fig. 1) for moving vegetables to the separator, its shaft is fixed on the frame 5 of the device with the help of a bush 3 and fasteners 4.

The main transporter 6 fixed by the shaft 8 on the frame 5 with the help of a bush 9 and fasteners 10 has protruding fingers 7. It is mounted with the angle to the horizon.

The transporter 6 is made so that it has at least one bend part 12 of the upper bed 13. This is realized with the help of the upper bed 13 tensioner which comprises a roller 14 placed on the frame 5.

Fig. 2 shaws transporter 6' with three bend parts 11, 12', 12'' and some inclined parts on the upper bed 13 which are formed by the corresponding rollers 14 of the upper bed tensioner, placed along the transporter 6'. Each roller 14 is fixed in a slot 15 of the frame 5 so that it can move along the slot 15 to regulate the pitch length and the angle on the corresponding inclined parts.

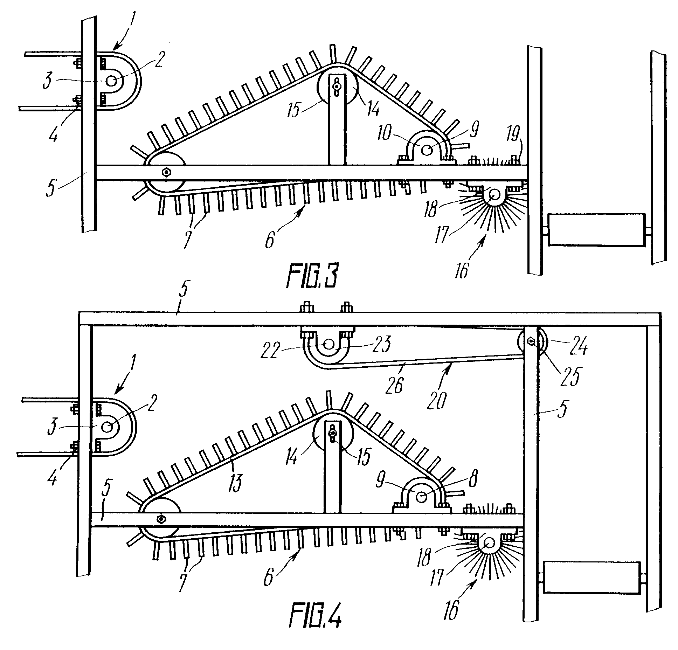

In the zone of the last inclined part of the upper bed 13 a brush drum 16 (fig. 3) is placed. Its shaft 17 is fixed on the frame 5 with the help of a bush 18 and fasteners 19. The position of the drum 16 to the transporter 6 can be regulated.

All the inclined parts of the transporter 6 are made so that the angle of obliquity of the bed 13 is smaller than the angle of friction of the admixtures on the transporter 6. It allows the admixtures to move along the transporter up to the moment of their separation and not to roll down to the zone where the separating mass is moved to.

The angle of obliquity of at least one of the dropping down inclined parts of the upper bed, best of all of the last one, must be equal or bigger than the angle of friction of vegetables on the transporter 6. If the angle of obliquity is smaller than the angle of friction, the vegetables will be stopped on the dropping down inclined part of the transporter 6, and the quality of the separation will deteriorate.

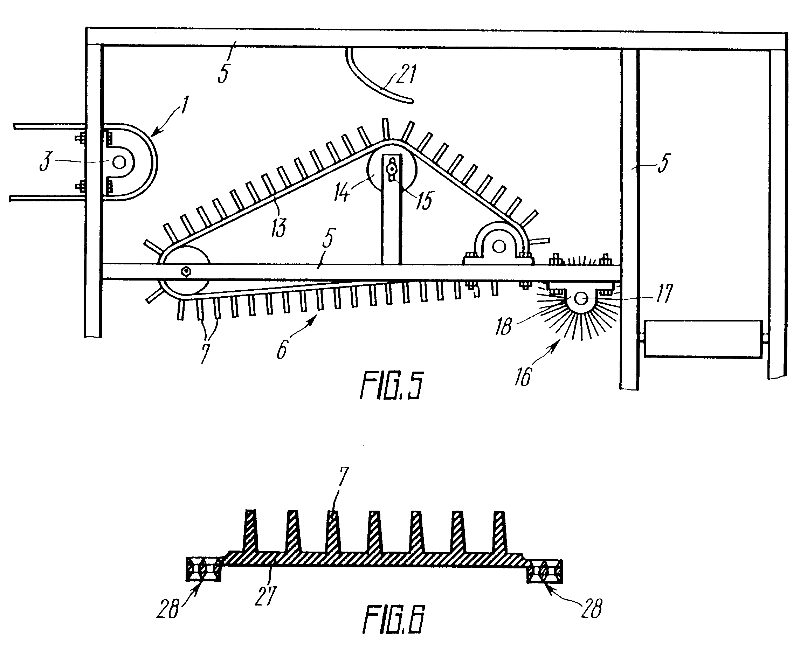

An element of the forced plunging of the separating products is placed between the fingers 7 of the transporter 6. It comprises the transporter 20 (fig. 4) or a bent plate 21 (fig. 5). The shaft 22 (fig. 4) of the transporter 20 is fixed in the bush 23 on the frame 5 and the shaft 25 is fixed in the slot 25 of the frame 5 so as they can move changing the distance between the bed 26 of the transporter 20 and the upper bed 13 of the transporter 6. The plate 21 (fig. 5) is fixed on the frame 5 and its convex side faces the transporter 6. The transporter 20 (fig. 4) and the plate 21 (fig. 5) are placed over one or some bend parts 12 of the upper bed 13 of the transporter 6.

It is more technologically to make the transporter 6 set of rigid rods 27 (fig. 6), each of them fixed on the locked and endless belts 28 with clearance one relatively another in order that some separated admixtures to fall through.

It is expedient that the rod 27 and its corresponding fingers 7 should be made a single unit as it is shown on fig. 6. The fingers 7 on the rod 27 are placed one relatively another and fingers 7 of the next rod 27 so as the formed cells are smaller than the average size of the separated vegetables.

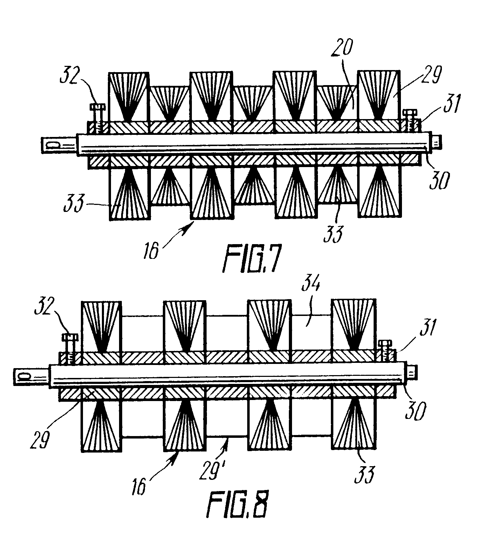

The brush drum 16 (fig. 7) is made of sections to raise the effeciency of the separation. All the sections 29 (fig. 7) are mounted on the shaft 30 where they are fixed by bushes 31 and screws 32.

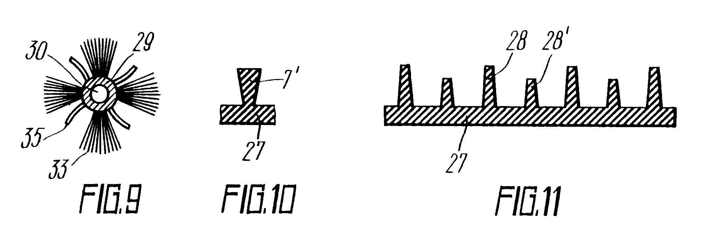

The sections 29 have hair 33 of different length and hardness alternating with one another along the shaft 30. Besides one or some sections 29 (fig. 8) have blades 34 instead of hair 33. It improves the separating process greatly. Sections 29 alternate along the shaft 30 with sections 29 and blades 34 have the height lower than that of the hair 33.

However blades 35 (fig. 9) may be placed on one section 29 with the hair 33 and alternate with the sections of the hair 33.

The hardness of the hair 33 must be weaker than that of the fingers 7 lest vegetables should be damaged.

Fingers 7' (fig. 10) have be shape of a truncated cone or a truncated pyramid and they are fixed on the rods 27 of the transporter 6 by means of their small foundation. Besides fingers 28 (fig. 11) and 28' have different height that provides the efficient separation of different vegetables and root-crops.

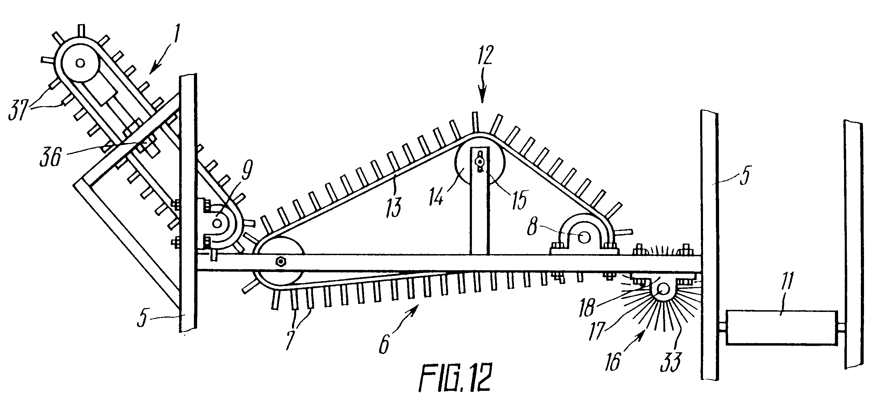

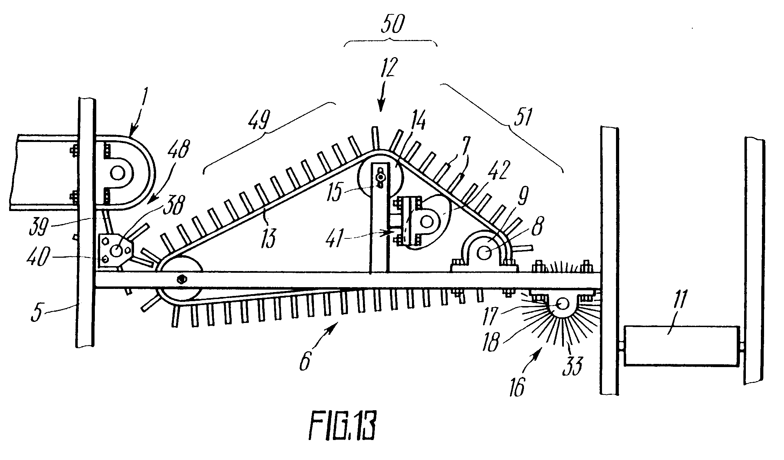

A transporter 1 (fig. 12) is made of the same kind with the transporter 6 and it is mounted in front of the transporter 6 as inclined to the horizon. It is fixed with the bushes 9 on the frame 5 and has its own drive 36 and protruding fingers 37. In the zone of the first part of the transporter 6 (fig. 13) the device for limiting of the zone of appearance of the products for separation on the transporter 6. It comprises a shaft 38 with protruding fingers 39 on it which are placed so that the fingers 7 and 35 alternate while the transporter 6 and shaft 38 are both moving. The shaft 38 is fixed on the frame 5 by the fasteners 40.

In order to improve the separation of vegetables from admixtures a device of shaking (a shaker) 41 is placed near one of the dropping down parts of the transporter 6. This device 41 has an eccentric shaft 42 interacting with the upper bed 13 of the transporter 6.

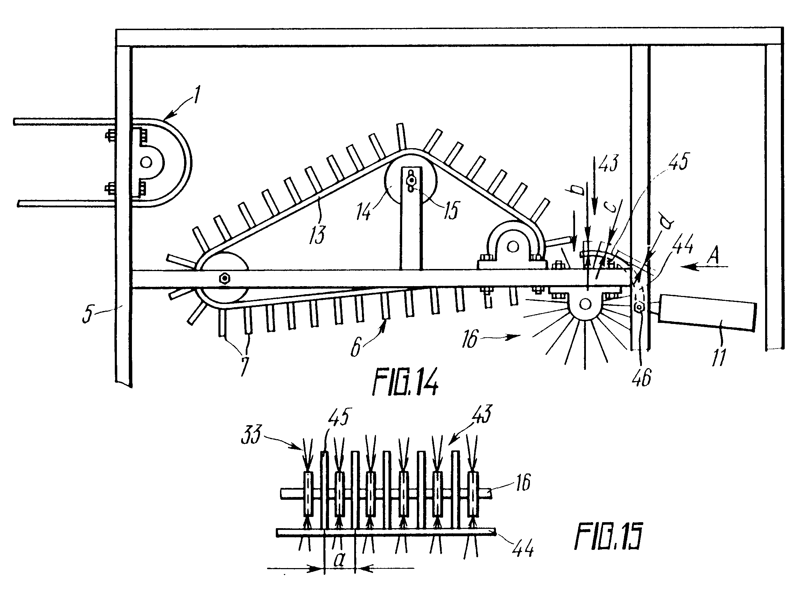

In order that the process of separation be more efficient in the zone of descending of the separating products from the brush drum 16 (fig. 14) the device 43 for deviding of vegetables and admixtures is placed. It comprises a foundation 44 and prodtruding rods 45. The foundation 44 is fixed on hinges on the frame 5 of the device with the help of a screw-nut 46 ensuring to regulate the going out of the hair 33 (fig. 7) over the rods 45 (fig. 14) in the zone where separating products contact the brush drum 16.

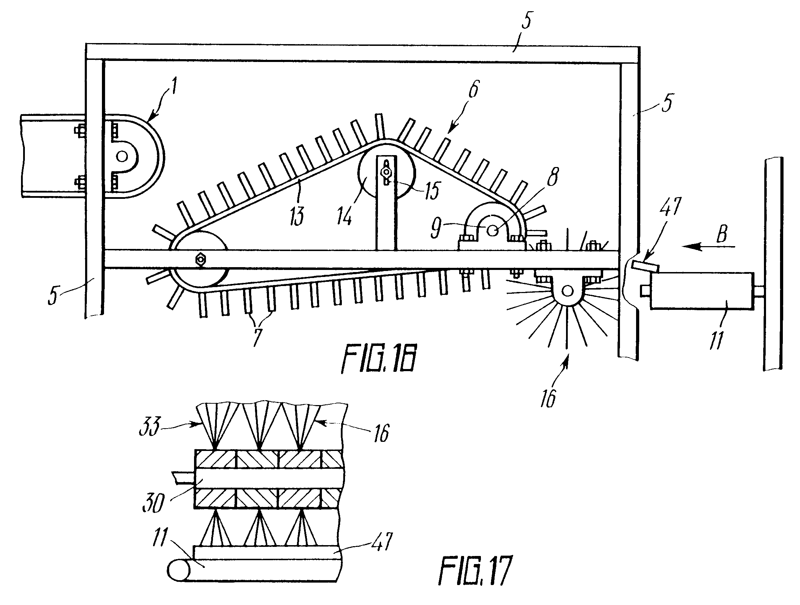

The rods 45 are directed to the brush drum 16 and form a comb with step A (fig. 15). Rods 45 and hair sections 33 of the drum 16 alternate each other.

Between the ends of the rods 45 of the comb and the fingers 7 of the transporter 6 there is a clearance "b" determinating the open hair 33 zone of the brush drum 16. The hair 33 of the brush drum 16 and rods 45 of the comb are placed alternating each other with the step "a". The use of the comb provides to increase the longitudinal hardness of the hair 33 of the brush drum 16 when the products of separation contact it, as a result the quality of the separation deteriorate.

Instead of the comb in the zone of descending of separating products down the brush drum 16, the amortizating plate 47 (fig. 16, 17) may be placed and fixed on the frame 5 as regulating the angle of obliquity. The plate 47 has a drive of horizontal travel across the brush drum 16.

In the zone where the separating products fall down, the hair 33 (fig. 7) of the drum 16 (fig. 14) projects over the rods 45.

The transporter 11 is placed perpendicularly and inclinedly to the drum 16.

The device for separating of vegetables and root-crops from admixtures works as follows.

Separating products move along the transporter 1 (fig. 1, 12, 13) to the zone 48 limited by the shaft 38 which does not allow them to be screened through the clearance between transporters 1 and 6.

The vegetables move along the transporter 6 to the zone 49 at the end of which all the components of the vegetable heap rest. The regulated angle of the inclined upper bed zone permits the vegetable heap to move to the zone 50 not more as of one stratum. When fingers 7 of the bed 13 on the transporter 6 open, vegetables plunge into the interfinger clearance with the help of the plate 21 (fig. 5) or the transporter 20 (fig. 4) because the fingers 7 on the upper zone bed 13 of the transporter 6 move apart and clearance of the corresponding size appears. Products of the separation drop through it. After the bed 13 of the transporter 6 have passed the roller 14 of the tensioner, its fingers 7 move to the zone 5 providing the expulsive force of overcoming of the force of friction and of gravity of standard vegetables. As the friction coefficient of soil clods or damaged pulp vegetables sliding, for example, on rubber is much more than that one of the same friction coefficient of standard vegetables on their peels, the soil clods are clutch in the zone 51 by elastic fingers 7. At that moment the expulsive force is less than the force of friction and of gravity, and the soil clods are moved to the zone 47 of the transporter 6. Due to the compressive force of the fingers 7 some admixtures are damaged and moved away through the clearance between the rods 28 (fig. 6).

The fingers 7 will go on moving apart and pressing if the transporter 6 has several bend parts, as it is shown on fig. 2. The larger part of the admixtures is damaged because the different up and down angles of the upper bed 13 influence the compressive force on different parts of the bed.

From the last dropping down part of the transporter 6 (fig. 12, 13) the products of separation move to the brush drum 16 where the admixtures are picked up with its hair 3 and/or blades 35 and 35 and are separated from the mass.

Standard vegetables rolling on the transporter 6 or moved by the fingers 7 farther on it than the admixtures, slide down on the hair 33 to the transporter 11 for standard vegetables.

As there is a difference between friction coefficients or standard vegetables and admixtures on the hair 33 of the drum 16, and because of the movement starting conditions of vegetable heap and its appearing near the drum 16, when standard vegetables are rolling and admixtures are immovable, the first are moved to the diametrical transporter in its first part.

Thanks to the fact that sections 29 have hair 33 of different hardness and length, and the hardness of the hair 33 is weaker than that one of the fingers 7, the conditions of the separation improve.

An additional vibration of the bed 13 is made by the shaker 42, and it provides the better separation of vegetables from admixtures.

When the comb (fig. 14) is mounted, standard vegetables appear on it farther from the vertical axis of the brush drum 16 and the admixtures appear nearer on that part of the transporter where the protruding hair is higher, i.e. b>c>d. Thus, the catching ability of the brush drum 16 for admixtures is greater and they are dropped down towards its rotating. In case when a clod equal to a standard vegetable appears on the comb, it is caught by the hair and moved to the transporter 6 because of its shape unevenness determinating the depth of plunging into the comb clearance, and because of the bigger friction coefficient on the hair of the brush drum 16. The open hair clearance "b" of the brush drum 16 permits to take away the admixtures clutched by the fingers 7 of the transporter 6 which do not contact the rods 45 of the comb.

When the products of separation are moved away diametrically by the comb of the transporter 11, final sorting of vegetables from small admixtures occasionally drawn to the bed when the vegetables were reloading from the transporter 1 to the transporter 6, takes place with the help of the brush drum.

The interrod space of the comb is constantly cleared by the hair of the brush drum 16. The using of an active toothed rack made of rotating hoops with the same interrod space is quite possible.

The diametrical angle of the transporter 11 is best of all fixed as a sharp one relatively to the vertical line and its upper plane. When the vegetable ratio in the heap, led from the transporter 6 is rather high, this angle must be an obtuse one. This helps vegetables to roll down from the zone where the brush drum acts when the products of separation are drawn aside diametrically.

When the ammortizating plate 47 (fig. 16, 17) is mounted behind the brush drum 16 and near, soil and vegetable admixtures, as well as damaged fruits, which have a small coefficient of restoration in comparison with standard vegetables found themselves under the influence of the brush drum's hair capture force. They are drawn away by the hair towards the brush drum's rotating. Standard vegetables leave this zone because of the considerable coefficient of their restoration and they are led to the transporter 11.

The device for separating of vegetables and root-crops from admixtures is universal and may be used independently or as a part of agricultural harvesting combines. The efficiency of the device is very high, it forms no less than 85-95%.

### The Using in Industry

This invention may be used for the harvesting and separating from admixtures of potatoes and jucy vegetables like tomatoes, egg-plants and peppers.

## Claims

1. The device for separating of vegetables and root-crops from admixtures comprising the transporter (6) with protruding fingers (7), mounted under the angle to the horizon on which separating products are placed, and the device for carrying out of the vegetables, mounted after the transporter (6) is distinguishing in that the transporter (6) has at least one bend part of the upper bed (13) in the zone of which protruding fingers (7) of the transporter (6) move apart and the separating products plunge between them; behind this zone the fingers draw together making the efforts to clamp and/or destroy at least some part of admixtures.

2. Device on pt. 1, distinguishing in that the transporter (6) has at least one the upper bed tension device (13) forming the bend and inclined parts, and the rollers (14) mounted on the frame (5) of the device along the transporter (6) so as they can regulate the length and the angle of pitch of the corresponding inclined parts.

3. Device on pt. 1 or pt. 2, distinguishing in that the brush drum regulating the position with respect to the inclined part of the transporter (6) is mounted in the zone of the last inclined part of the upper bed (13) of the transporter (6).

4. Device on pt. 2, distinguishing in that all the inclined parts of the transporter (6) have the angle of obliquity smaller than that of admixtures friction on the transporter (6), and the angle of obliquity of at least one of the dropping down parts is equal or bigger than the angle of vegetables friction on the transporter (6).

5. Device on pt. 4, distinguishing in that the last of the dropping down parts of the transporter has the angle of obliquity equal or bigger than the angle of vegetables friction on the transporter.

6. Device on pt. 3, distinguishing in that all the inclined parts of the transporter (6) have the angle of obliquity smaller than the angle of of admixtures friction on the transporter (6), and the angle of obliquity of at least one of the dropping down parts is equal or bigger than the angle of vegetables friction on the transporter (6).

7. Device on any of pts. 1, 2, 4 or 5, distinguishing in that at least on one of the bending parts of the transporter (6) where the fingers (7) move apart, an element (20 or 21) of forced plunging of the products of separation in the clearance between the fingers (7) is placed.

8. Device on any of pts. 1, 2, 4 or 5, distinguishing in that the transporter (6) is made of rigid rods (27) with the fingers (7) mounted on locked and endless conveying belt (28).

9. Device on any of pts. 1, 2, 4 or 5, distinguishing in that the protruding fingers (7) of the transporter (6) form the cells with the size smaller than the size of the sorting vegetables.

10. Device on pt. 8, distinguishing in that the protruding fingers (7) of the transporter (6) form the cells with the size smaller than the size of the sorting vegetables.

11. Device on any of pts. 1, 2, 4 or 5, distinguishing in that it has the additional transporter, mounted in front of the main transporter as inclinable to the horizon.

12. Device on pt. 3, distinguishing in that the brush drum (16) is made of sections and the sections have the hair of different lenght and hardness.

13. Device on pt. 12, distinguishing in that the brush drum has at least one section with blades lower than the hair of the sections.

14. Device on pt. 12, distinguishing in that at least one of the brush drum sections has blades alternating with the hair.

15. Device on pt. 13, distinguishing in that at least one of the brush drum (16) sections has blades alternating with the hair.

16. Device on any of pts. 1, 2, 4 or 5, distinguishing in that the device limiting the zone for appearance of separating products on the transporter and having protruding fingers on its cylinder surface, alternating with the fingers of the main transporter while the device and the main transporter are moving, is mounted in the front zone of the main transporter.

17. Device on any of pts. 1, 2, 4 or 5, distinguishing in that the protruding fingers of the main transporter are of different length.

18. Device on pt. 3, distinguishing in that the hair hardness of the brush drum is weaker than that one of the fingers of the main transporter.

19. Device on any of pts. 1, 2, 4 or 5, distinguishing in that at least on one of the dropping down parts of the upper bed of the main transporter a shaking mechanism is placed.

20. Device on any of pts. 1, 2, 4 or 5, distinguishing in that each of the protruding fingers on the main transporter with the shape of a truncated cone or a truncated pyramid is fixed on the main transporter by its smaller foundation.

21. Device on pt. 3, distinguishing in that the appliance for deviding of the products for separation, placed in the zone where they leave the brush drum (16).

22. Device on pt. 12, distinguishing in that the appliance for deviding of the products for separation, placed in the zone where they leave the brush drum (16).

23. Device on pt. 21, distinguishing in that the appliance for deviding of the products for separation includes the foundation (44) fixed on the frame (5) so that its angle position to the brush drum (16) can be regulated, and has protruding rods (45) directed to the brush drum (16) and forming a comb.

24. Device on pt. 22, distinguishing in that the appliance for deviding of the products for separation includes the foundation (44) fixed on the frame (5) so that its angle position to the brush drum (16) can be regulated, and has protruding rods (45) directed to the brush drum (16) and forming a comb.

25. Device on pt. 21, distinguishing in that the appliance for deviding of the products for separation is fit with a clearance (b) relatively to the transporter (6).

26. Device on pt. 22, distinguishing in that the appliance for deviding of the products for separation is fit with a clearance (b) relatively to the transporter (6).

27. Device on pt. 24, distinguishing in that the appliance for deviding of the products for separation is placed relatively to the brush drum (16) so that the rods (45) alternate with the brush drum (16) sections.

28. Device on pt. 27, distinguishing in that the hair of the brush drum (16) protrudes over the comb rods (45) in the zone where the products of separation fall down.

29. Device on pt. 21, distinguishing in that the appliance for moving vegetables away is made in the form of the transporter (11) placed perpendicularly and inclinedly to the brush drum (16).

30. Device on pt. 22, distinguishing in that the appliance for moving vegetables away is made in the form of the transporter (11) placed perpendicularly and inclinedly to the brush drum (16).

31. Device on pt. 21, distinguishing in that the appliance for deviding of the products for separation comprises an amortizating plate (47) placed between the brush drum (16) and the appliance for transporting of vegetables.

32. Device on pt. 22, distinguishing in that the appliance for deviding of the products for separation comprises an amortizating plate (47) placed between the brush drum (16) and the appliance for transporting of vegetables.
